# EUROPEAN PATENT APPLICATION

(11) **EP 1 835 454 A1**
(43) Date of publication of application: **19.09.2007**
(21) Application number: 07108366.1
(22) Date of filing: 14.01.2003
(51) Int. Cl.: G06Q 30/00

(54) **Information distribution method and apparatus, business method, and storage medium**

(30) Priority: 19.02.2002 JP 2002042071
(62) Divisional of application: 03250207.2
(71) Applicant: Fujitsu Ltd., Kawasaki-shi, Kanagawa 211-8588 (JP)
(72) Inventor: Isobe, Yasuhiko c/o FUJITSU LIMITED, Kawasaki-shi Kanagawa 211-8588 (JP); Ootake, Teruo c/o FUJITSU LIMITED, Kawasaki-shi Kanagawa 211-8588 (JP)
(74) Representative: Sunderland, James Harry

(57) **Abstract**

An information distribution system comprises an information distribution apparatus for distributing contents and advertisements to a user terminal equipment via a network. The information distribution apparatus comprises a replacing section which replaces a portion of the contents by arbitrary image information forming a portion of an advertisement, based on a format with which the advertisements are to be received and is requested from the user terminal equipment, and a distributing section which distributes the contents in which said portion is replaced by the arbitrary image information to the user terminal equipment. Each user terminal equipment comprises a selecting section which selects a format of advertisements and a transmitting section which transmits the format selected by the selecting section to the information distribution apparatus.

## Description

### BACKGROUND OF THE INVENTION

This application claims the benefit of a Japanese Patent Application No.2002-042071 filed February 19, 2002, in the Japanese Patent Office, the disclosure of which is hereby incorporated by reference.

### 1. Field of the Invention

The present invention generally relates to information distribution methods and apparatuses, business methods and storage media, and more particularly to an information distribution method, an information distribution apparatus and a business method for providing a content distribution service via a network such as the Internet, and to a computer-readable storage medium which stores a program for causing a computer to provide such a content distribution service.

### 2. Description of the Related Art

Content distribution services distribute contents including image information, such as movies and music, and/or audio information, to users. The content distribution may be charged to the user (that is, pay-content distribution service) or may be free of charge (that is, free-content distribution service). In the case of the pay-content distribution service, the contents are distributed to the user who has paid for the service or, to the user who has agreed to a contract to pay for the service. On the other hand, in the case of the free-content distribution service, the advertising charges are charged to the advertisers, and the content provider inserts the advertisements when distributing the contents, so that the user who acquires the contents receive the advertisements together with the contents.

When the advertisements are inserted one-sidedly by the content provider when distributing the contents, it is difficult to distribute the advertisements having a content which is sure to attract the user's attention or interest. If the distributed advertisement has a content which is not interesting to the user, the user will not see or listen to the advertisement with interest, thereby making the advertising effect of the advertisement is extremely poor, and from the point of view of the advertiser the advertising expenses cannot be utilized effectively.

Accordingly, a method has been proposed to inform the provider in advance of the information the user has interests in, such as the user's hobbies, so that the provider can distribute the advertisements having the content which matches the interests of the user such as the user's hobbies. For example, such a method is proposed in a Japanese Laid-Open Patent Application No.10-79711. According to this proposed method, if the user is interested in sports, for example, the provider selects the advertisements related to sporting goods, advertisements in which sport players appear, advertisements in which a sport is being played, and the like, and only the sport-related advertisements are distributed to the user. In addition, the advertising charge to the advertiser can be determined depending on the number of advertisements received by the user or the time for which the user receives the advertisements. As a result, the advertising effect of the advertisements is improved because the user receives only the advertisements having the content that is interesting to the user, and from the point of view of the advertiser, it is possible to effectively utilize the advertising expenses.

The advertisement having the content selected by the provider is distributed to the user according to one of the following formats (a) through (c). According to the first format (a), an advertisement having a predetermined length of time (duration time), similarly to a 15-second commercial in a television broadcast, is inserted before, during, after and/or between two successive programs. According to the second format (b), an advertisement is displayed outside or inside the contents, similarly to a banner commercial. In addition, according to the third format (c), an advertisement is indirectly inserted into the contents, by using an automobile a character is driving in a program, for example, similarly to an intra-content advertisement. The intra-content advertisement refers to an advertisement in which a product or the like to be advertised is indirectly inserted into the contents, such as a program, so that the product appears during the program.

As will be described later, in this specification, the format of the advertisement which is distributed (hereinafter referred to as the advertisement distribution format), refers to the format which is determined by parameters related to time restrictions such as timings when the advertisement is distributed and duration time of the advertisement, parameters related to image restrictions such as the position on a screen where the advertisement is displayed, color and tone, existence of scrolling or blinking, motion picture and/or still picture, parameters related to attribute restrictions such as whether the content of the advertisement inside or outside the contents, and whether the content of the advertisement is independent of or synchronized to the contents.

According to the proposed method described above, the user can receive only the advertisements having the content interesting to the user. However, the advertisement distribution format is determined by the provider, and there is a problem in that the user cannot receive the advertisements with the desired format. For this reason, if the advertisement is distributed to the user with a format which does not suit the user's tastes or with a format the user dislikes, the user may not receive the advertisement with interest even though the advertisement itself does contain the content interesting to the user. As a result, there is another problem in that the advertising effect of the advertisement may deteriorate depending on the format used to distribute the advertisements interesting to the user.

### SUMMARY OF THE INVENTION

Accordingly, it is a general object of the present invention to provide a novel and useful information distribution method, information distribution apparatus, business method and computer-readable storage medium, in which the problems described above are eliminated.

Another and more specific object of the present invention is to provide an information distribution method, an information distribution apparatus, a business method and a computer-readable storage medium, which enables a user to select a format of an advertisement which is to be received, and to further improve the advertising effect of the advertisement.

Still another object of the present invention is to provide an information distribution method for distributing contents and advertisements from a provider to a user terminal equipment via a network, comprising a replacing step which replaces a portion of the contents by arbitrary image information forming a portion of an advertisement, based on a format with which the advertisements are to be received and is requested from the user terminal equipment, and a distributing step which distributes the contents in which the portion is replaced by the arbitrary image information to the user terminal equipment. According to the information distribution method of the present invention, it is possible to enable a user to select a format of an advertisement which is to be received, and to further improve the advertising effect of the advertisement.

A further object of the present invention is to provide a computer-readable storage medium which stores a program for causing a computer to distribute contents and advertisements to a user terminal equipment via a network, where the program comprises a replacing procedure which causes the computer to replace a portion of the contents by arbitrary image information forming a portion of an advertisement, based on a format with which the advertisements are to be received and is requested from the user terminal equipment, and a distributing procedure which causes the computer to distribute the contents in which the portion is replaced by the arbitrary image information to the user terminal equipment. According to the computer-readable storage medium of the present invention, it is possible to enable a user to select a format of an advertisement which is to be received, and to further improve the advertising effect of the advertisement.

Another object of the present invention is to provide an information distribution apparatus for distributing contents and advertisements to a user terminal equipment via a network, comprising a replacing section which replaces a portion of the contents by arbitrary image information forming a portion of an advertisement, based on a format with which the advertisements are to be received and is requested from the user terminal equipment, and a distributing section which distributes the contents in which the portion is replaced by the arbitrary image information to the user terminal equipment. According to the information distribution apparatus of the present invention, it is possible to enable a user to select a format of an advertisement which is to be received, and to further improve the advertising effect of the advertisement.

Another object of the present invention is to provide a business method for distributing contents and advertisements from a computer of a provider to a terminal equipment of a user via a network, charging advertising charges to advertisers of the advertisements, and providing free-content services to the user, comprising a managing step which manages a number of points depending on the advertisements and a format with which the advertisements are to be received and is requested from the user, and a control step which controls distribution of the contents by replacing a portion of the contents by arbitrary image information forming a portion of an advertisement, based on the format requested by the user, and controls distribution of the contents depending on the number of points. According to the business method of the present invention, it is possible to enable a user to select a format of an advertisement which is to be received, and to further improve the advertising effect of the advertisement.

Therefore, according to the present invention, the user can receive the advertisements with the format the user likes or prefers. In addition, the provider can provide various kinds of advertisements with the formats preferred by the users, and when advertising a product such as a soft drink and an automobile which appears within the contents which are distributed, the advertisement can be distributed without limits on the advertisers. Furthermore, the advertiser can efficiently distribute the advertisements which are less likely to cause negative impressions on the users, and a variety of advertisements can be distributed, such as short-term concentrated type advertisements and detailed explanation type advertisements which explain the advertising products in detail.

Other objects and further features of the present invention will be apparent from the following detailed description when read in conjunction with the accompanying drawings.

### BRIEF DESCRIPTION OF THE DRAWINGS

FIG. 1 is a diagram showing a structure of a system employing a first embodiment of an information distribution method according to the present invention;
FIG. 2 is a flow chart for explaining an operation of the first embodiment;
FIG. 3 is a time chart for explaining a communication procedure between a provider and a user in the first embodiment;
FIG. 4 is a diagram showing a content and advertisement selection screen;
FIG. 5 is a diagram showing an advertisement selection screen;
FIG. 6 is a diagram showing a detail setting screen;
FIG. 7 is a diagram showing the detail setting screen for a case where a mode for selecting each advertisement is selected;
FIG. 8 is a diagram showing a product category selection screen;
FIG. 9 is a diagram for explaining a point list display screen;
FIG. 10 is a diagram showing a detail setting screen for a case where a mode for semi-automatically selecting advertisements is selected;
FIG. 11 is a diagram showing the product category selection screen;
FIG. 12 is a flow chart for explaining a part of the process shown in FIG. 2 in more detail;
FIG. 13 is a flow chart for explaining a part of the process shown in FIG. 2 in more detail;
FIG. 14 is a flow chart for explaining creation and storage of an advertisement list;
FIG. 15 is a flow chart for explaining a part of the process shown in FIG. 2 in more detail;
FIG. 16 is a diagram showing an advertisement selection screen;
FIG. 17 is a flow chart for explaining an adjusting process;
FIG. 18 is a flow chart for explaining the adjusting process;
FIG. 19 is a flow chart for explaining the adjusting process;
FIG. 20 is a flow chart for explaining a part of the process shown in FIG. 2 in more detail;
FIG. 21 is a flow chart for explaining a part of the process shown in FIG. 2 in more detail;
FIG. 22 is a flow chart for explaining a part of the process shown in FIG. 2 in more detail;
FIG. 23 is a flow chart for explaining a process dependent on a setting on the detail setting menu shown in FIG. 6;
FIG. 24 is a flow chart for explaining a process of giving points as presents;
FIG. 25 is a diagram for explaining a format of a received advertisement;
FIG. 26 is a flow chart for explaining a pre-processing which creates information necessary to replace a replacing portion;
FIGS. 27A and 27B are diagrams for explaining a process of replacing image information of the replacing portion by another image information;
FIGS. 28A and 28B are diagrams for explaining a surface model;
FIG. 29 is a flow chart for explaining a part of the process shown in FIG. 2 in more detail; and
FIG. 30 is a diagram showing a structure of a system employing a modification of a second embodiment of the information distribution method according to the present invention.

### DESCRIPTION OF THE PREFERRED EMBODIMENTS

A description will be given of embodiments of an information distribution method, an information distribution apparatus, a business model and a computer-readable storage medium according to the present invention, by referring to the drawings.

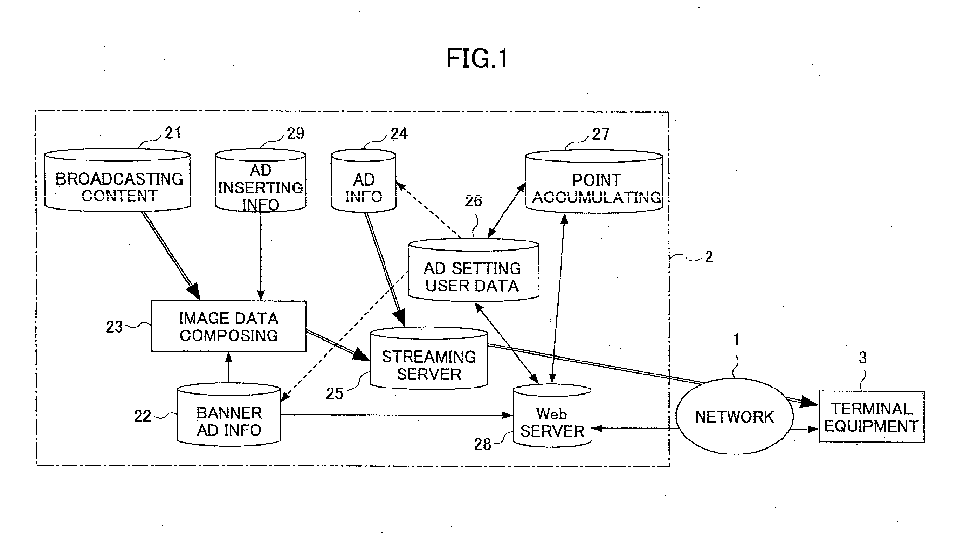

FIG. 1 is a diagram showing a structure of a system employing a first embodiment of the information distribution method according to the present invention. This first embodiment of the information distribution method employs a first embodiment of the information distribution apparatus according to the present invention, a first embodiment of the business model according to the present invention, and a first embodiment of the computer-readable storage medium according to the present invention.

The system shown in FIG. 1 includes a computer system 2 and a terminal equipment 3 which are connected via a network 1 such as the Internet. The computer system 2 is provided on the provider side, and the terminal equipment 3 is provided on the user side. The network 1 may be formed by a cable network, a wireless network or, a combination of cable and wireless networks. The computer system 2 is formed by a computer having a known structure including a CPU, a storage unit, an input/output section such as a display unit, and the like. The terminal equipment 3 is formed by a personal computer having a known structure including a CPU, a storage unit, an input/output section such as a display unit, and the like. The computer system 2 forms the first embodiment of the information distribution apparatus, and executes the computer program stored in the first embodiment of the computer-readable storage medium such as the storage unit of the computer system 2. The first embodiment of the business method is carried out by the computer system 2 of the system shown in FIG. 1. The kind of storage unit forming the first embodiment of the computer-readable storage medium is not limited to a specific kind, and the storage unit may be formed by any kind of computer-readable storage medium.

For the sake of convenience, FIG. 1 shows the functional blocks forming the computer system 2. The computer system 2 includes a broadcasting content section 21, a banner advertisement information section 22, an image data composing section 23, an advertisement information section 24, a streaming server 25, an advertisement setting user data section 26, a point accumulating section 27, a Web server 28, and an advertisement inserting information section 29. The broadcasting content section 21 stores broadcasting contents including programs made up of image information such as movies and music, and/or audio information. The banner advertisement information section 22 stores information related to banner advertisements. The advertisement inserting information section 29 stores advertisement inserting information such as advertisement lists. When blending and displaying the banner advertisement within the contents, the image data composing section 23 composes or combines the data from the broadcasting content section 21 and the banner advertisement information section 22, based on the advertisement inserting information from the advertisement inserting information section 29, and supplies the composed data to the streaming server 25. On the other hand, when displaying the banner advertisement outside the contents, the Web server 28 pastes the banner advertisement information from the banner advertisement information section 22 on the data from the broadcasting content section 21, depending on parameters such as tone from the advertisement setting user data section 26, and transmits the resulting data to the terminal equipment 3 via the network 1. The advertisement setting user data section 26 stores information which determines the distribution format of the advertisements, such as (i) parameters related to time restrictions such as the timings when the advertisements are distributed and the duration (time) of each advertisement, (ii) parameters related to image restrictions such as position, color, tone, and existence of scrolling, blinking, motion picture and still picture in the advertisements displayed on a screen, (iii) parameters related to attribute restrictions such as whether the content of the advertisements is inside or outside and/or independent of the contents, and (iv) parameters related to audio restrictions such as volume of the audio.

The advertisement information from the advertisement information section 24 is supplied to the streaming server 25 depending on the parameters from the advertisement setting user data section 26, such as the parameter related to the time restrictions. The streaming server 25 forms a server for the motion picture. The streaming server 25 adds and/or inserts the advertisement information from the advertisement information section 24 to the data of the contents or the composed data of the contents and the banner advertisement from the image data composing section 23, and transmits the resulting data to the terminal equipment 3 via the network 1 if the user's points (number of points accumulated for the user) managed by the point accumulating section 27 are sufficient to acquire the contents requested by the user. As will be described later, the point accumulating section 27 accumulates and manages the user's points (number of points) depending on the advertisements and formats thereof requested by the user.

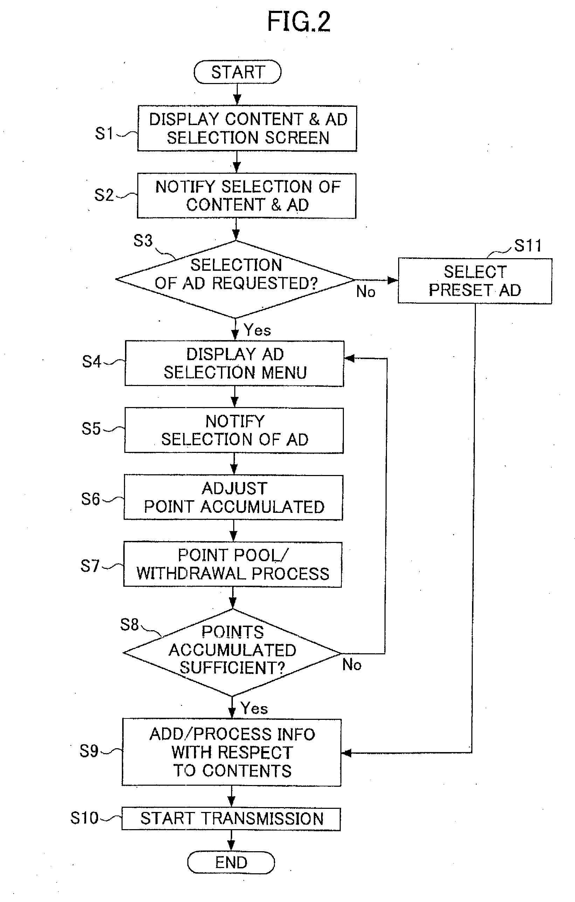

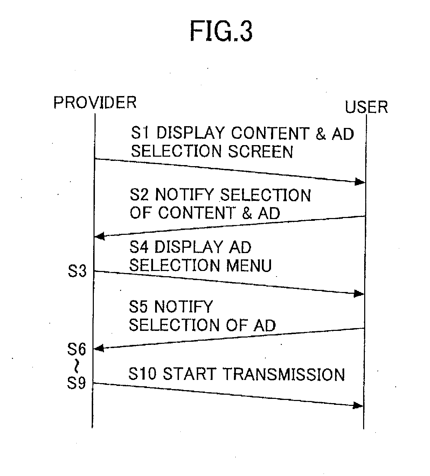

FIG. 2 is a flow chart for explaining an operation of the first embodiment. In addition, FIG. 3 is a time chart for explaining a communication procedure between the computer system 2 (provider) and the terminal equipment 3 (user) in the first embodiment. In FIGS. 2 and 3, the same steps are designated by the same reference numerals. Steps S1, S3 and S6 through S10 are carried out by the computer system 2, and steps S2 and S5 are carried out by the terminal equipment 3.

In FIGS. 2 and 3, a step S1 transmits to and displays on the display unit of the terminal equipment 3 a content and advertisement selection screen which includes a content selection menu and an advertisement-selection selection menu. The advertisement-selection selection menu is urges the user to make a selection regarding whether or not the advertisements are to be selected. A step S2 notifies to the computer system 2 the selection of the content made by the user on the content selection menu and the selection made by the user on the advertisement-selection selection menu regarding whether or not the advertisement is to be selected. A step S3 decides whether or not the selection of the advertisement is requested, and the process advances to a step S4 if the decision result in the step S3 is YES. The step S4 transmits to and displays on the display unit of the terminal equipment 3 an advertisement selection menu. A step S5 notifies to the computer system 2 the selection of the advertisement made by the user on the advertisement selection menu.

A step S6 adjusts the points accumulated for the user depending on the advertisement and the format thereof selected (requested) by the user, if an automatic point adjustment is set. A step S7 carries out a point pool and/or withdrawal process. A step S8 decides whether or not the points accumulated for the user are sufficient to receive the contents selected by the user, and the process returns to the step S4 if the decision result in the step S8 is NO.

On the other hand, if the decision result in the step S8 is YES, a step S9 adds and/or processes information depending on the advertisement and the format thereof selected by the user, with respect to the contents selected by the user. A step S10 starts transmission of the selected advertisement with the selected format and the selected contents to the terminal equipment 3, and the process ends.

If the decision result in the step S3 is NO, a step S11 selects the advertisement and the format thereof which are preset in the computer system 2, and the process advances to the step S9. Hence, in this case, the step S9 adds and/or processes information depending on the advertisement and the format thereof selected by the provider (preset in the computer system 2), with respect to the contents selected by the user. The step S10 starts transmission of the selected advertisement with the selected format and the selected contents to the terminal equipment 3, and the process ends.

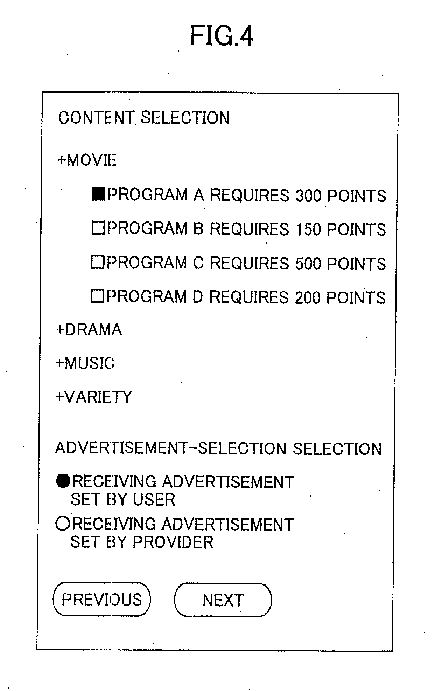

FIG. 4 is a diagram showing the content and advertisement selection screen which is displayed on the display unit of the terminal equipment 3 in the step S1. In FIG. 4 and each of the screens which will be described hereinafter, a selected item is indicated by symbols **"■"** or "●", and a non-selected item is indicated by symbols "□" or "○".

FIG. 4 shows a case where it is possible to select on the content selection menu a movie program from a program A, which requires 300 points to receive, through a program D, which requires 200 points to receive, a drama program, a music program and a variety program. It is also possible to select on the advertisement-selecLion selection menu a mode where the advertisement and the format thereof are set by the user, and a mode where the advertisement and the format thereof are set by the provider. For the sake of convenience, it is assumed that the program A is selected as the contents, and the mode where the advertisement and the format thereof are set by the user is selected as the advertisement-selection, in the step S2, and that the decision result in the step S3 is YES. However, the decision result in the step S3 is NO if the mode where the advertisement and the format thereof are set by the provider is selected as the advertisement-selection. The selection on the menu can be made by known methods, such as operating a keyboard and/or a mouse included in the input/output section of the terminal equipment 3.

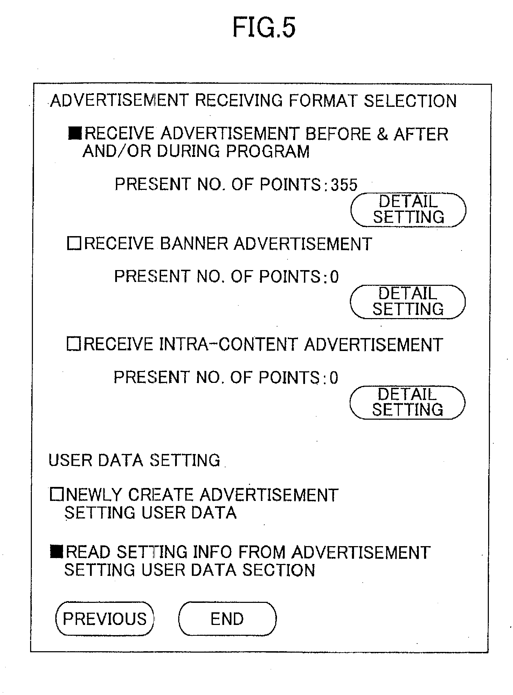

FIG. 5 is a diagram showing an advertisement selection screen which includes an advertisement receiving format selection menu and a user data setting menu, for a case where the mode in which the advertisement and the format thereof are set by the user is selected as the advertisement-selection on the advertisement-selection selection menu shown in FIG. 4. In other words, FIG. 5 shows the advertisement receiving format selection menu which is displayed on the display unit of the terminal equipment 3 in the step S4. FIG. 5 shows a case where a format in which the advertisement is received before and after and/or during the program, a format in which the banner advertisement is received, and a format in which the infra-content advertisement is received, are selectable as the advertisement receiving format. In addition, FIG. 5 shows a case where a mode in which the advertisement setting user data is newly created and a mode in which the setting information is read from the advertisement setting user data section 26, are selectable as the user data setting. The number of points presently owned by the user and a "detail setting" button are displayed on the advertisement receiving format selection menu for each of the selectable formats.

The advertisement setting user data is the setting information stored at the computer system 2 or at the terminal equipment 3. FIG. 1 shows a case where the advertisement setting user data section 26 is provided in the computer system 2. The setting information includes data indicating the user's tastes, such as received advertisement information (code number, for example) and detailed data (setting of the banner advertisement, for example) which have been set and stored by the user in the past at a certain time, and a log of reception reject signals generated by the user with respect to the advertisements. FIG. 5 shows a case where the mode in which the setting information is read from the advertisement setting user data section 26 is selected on the user data setting menu. Hence, in this case, the setting information read from the advertisement setting user data section 26 is used as a default value when the advertisement selection screen is selected the next time. Various selection screens or menus are displayed using the data read from the advertisement setting user data section 26 as the default values, to urge the user to make inputs related to a change, new setting and the like. When an "end" button is selected on the selection screen or menu, the selections made on the selection screen or menu are confirmed and decided.

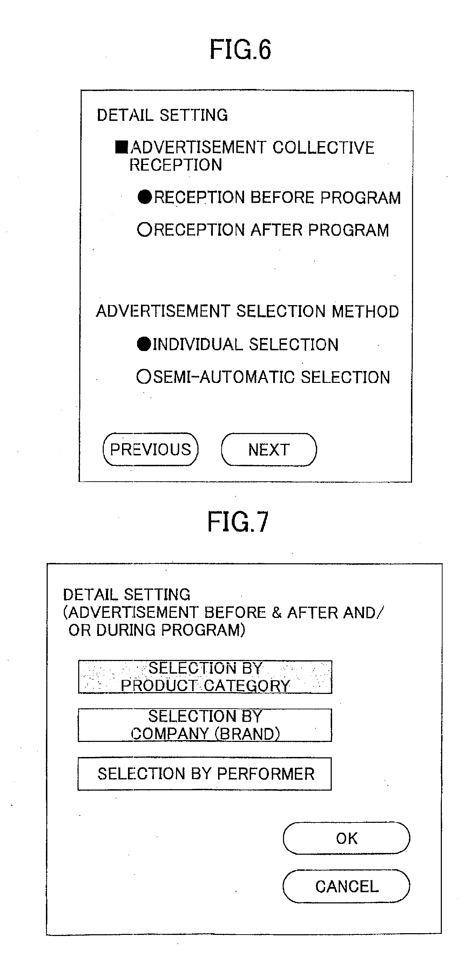

FIG. 6 is a diagram showing a detail setting screen which includes an advertisement collective reception selection menu and an advertisement-selection method selection menu. The detail setting screen shown in FIG. 6 is displayed when the format in which the advertisement is received before and after and/or during the program is selected on the advertisement receiving format selection menu and the "detail setting" button is selected in FIG. 5. FIG. 6 shows a case where an advertisement collective reception and an advertisement selection method are selectable on the detail setting screen. When the advertisement collective reception is not selected, the reception of the advertisement during the program broadcasting is automatically selected. However, it is of course possible to provide an item in the advertisement collective reception selection menu shown in FIG. 6 for selecting the reception of the advertisement during the program broadcasting. With regard to the advertisement collective reception, it is possible to select the collective reception before broadcasting of the program or after broadcasting of the program. It is possible to set the number of points acquired by the selection of the collective reception after the broadcasting of the program smaller than the number of points acquired by the selection of the collective reception before the broadcasting of the program. On the other hand, a mode in which each advertisement is selected individually and a mode in which the advertisement is selected semi-automatically are selectable on the advertisement-selection method selection menu. FIG. 6 shows a case where the collective reception before the broadcasting of the program is selected as the advertisement collective reception, and the mode in which each advertisement is selected individually is selected as the advertisement-selection method.

In FIGS. 4 through 6, when a "PREVIOUS" button is selected, the displayed screen returns to the previous screen. In addition, the displayed screen advances Lo the next screen when a "NEXT" button is selected.

Of course, the detail setting screen shown in FIG. 6 may be displayed in an overlapping manner on the advertisement selection screen shown in FIG. 5.

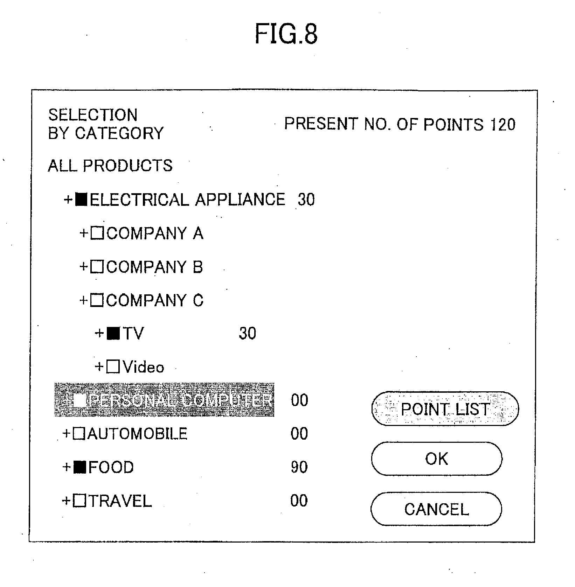

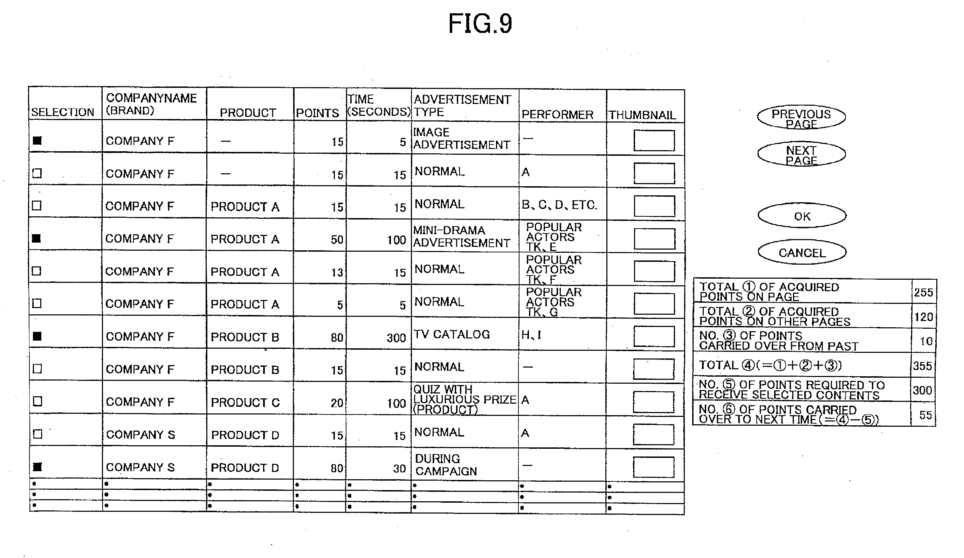

FIG. 7 is a diagram showing a detail setting screen for the case where the mode for selecting each advertisement is selected on the detail setting screen shown in FIG. 6. On the detail setting screen shown in FIG. 7, it is possible to select how the advertisements are to be searched and selected from the advertisements which are provided from the computer system 2. More particularly, it is possible to make a selection by product category, a selection by company (brand) name, and a selection by performer. The selection by product category enables the user to select advertisements related to a product (or product category), by selecting the product (or product category) the user is interested in. The selection by company (brand) name enables the user to select advertisements related to a company or products of the company, by selecting the company the user is interested in. In addition, the selection by performer enables the user to select advertisements in which a performer such as an actor appears, by selecting the performer the user is interested in. When an "OK" button on the detail setting screen shown in FIG. 7 is selected, the selections made on the detail setting screen shown in FIG. 7 and on the screens shown in FIGS. 8 and 9 which will be described later are confirmed and decided. When a "CANCEL" button on the screens shown in FIGS. 7 through 9 is selected, the selections made on the corresponding screen are cancelled.

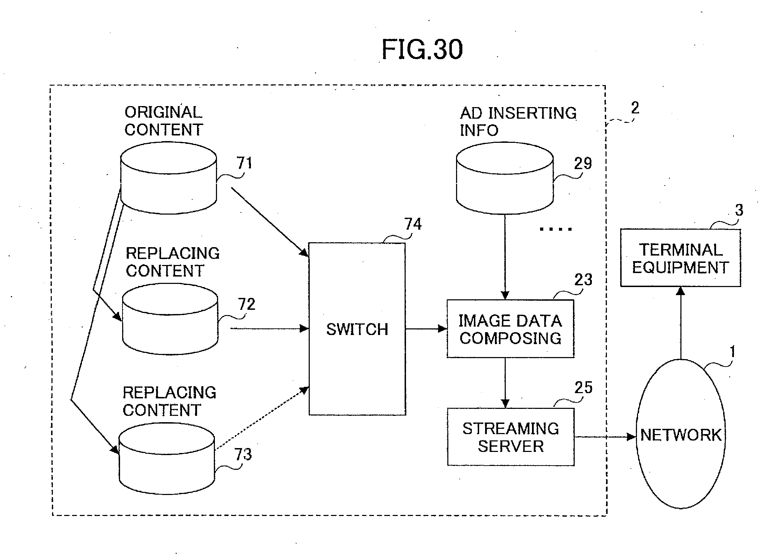

FIG. 8 is a diagram showing a product category selection screen which is displayed when the selection by product category is selected on the detail setting screen shown in FIG. 7. The number of points which can presently be acquired by the user, and a tree of all product categories and products of each product category are displayed on the product category selection screen shown in FIG. 8. For example, electrical appliance, personal computer, automobile, food and travel may be selected as the product category. With respect to the electrical appliance, companies A, B and C can be selected, and television (TV) and video deck (Video) can be selected for the electrical appliance of the company C. Moreover, the number of points that may be acquired by the user by selecting the product is displayed with respect to each selected product. In the case shown in FIG. 8, 30 points can be acquired by selecting the electrical appliance, 30 points can be acquired by selecting the TV, and 90 points can be acquired by selecting the food. Thus, the number of points which can be presently be acquired by the user is 120 points in this particular case.

When the "OK" button is selected in FIG. 8, the selections made on the product category selection screen are confirmed and decided. On the other hand, when the "CANCEL" button is selected in FIG. 8, selections made on the product category selection screen are cancelled. When a "POINT LIST" button is selected in a state where at least one item is selected on the product category selection screen shown in FIG. 8, a point list display screen shown in FIG. 9 is displayed.

FIG. 9 is a diagram for explaining the point list display screen. The point list display screen shown in FIG. 9 includes a list and columns of acquired points. The list has columns indicating the item selection, company (brand) name, product, number of points, time, advertisement type, performer, and thumbnail. For example, a still or motion picture of an impressive scene within the advertisement is displayed under the thumbnail column of the list. Of course, a plurality of thumbnails may be provided with respect to one item selection. In the columns of acquired columns, there are displayed a total ① of acquired points on the page which is presently being displayed, a total ② of acquired points on other pages, a number ③ of points carried over from the past, a total ④ (=①+② +③) of points which may be acquired, a number ⑤ of points required to receive the contents selected by the user, and a number ⑥ (=④-⑤) of points carried over to the next time. The previous page of the list is displayed when a "PREVIOUS PAGE" button on the point list display screen is selected, and the next page of the list is displayed when a "NEXT PAGE" button on the point list display screen is selected. In addition, the selections made on the point list display screen are confirmed and decided when an "OK" button is selected on the point list display screen, and the selections made on the point list display screen are cancelled when a "CANCEL" button is selected on the point list display screen. In the case shown in FIG. 9, the total ④ exceeds the number ⑤ of points required to receive the contents selected by the user, and thus, by selecting the "OK" button, the series of advertisement selection operations is completed, and it becomes possible to receive the selected contents. Moreover, it is possible to provide a known sorting function so that it is possible to rearrange the order of the item selections on the list.

Accordingly, when the advertisements are selected on the point list display screen and the total ④ reaches the number ⑤ of points required to receive the contents selected by the user, the advertisement selection operations end, and the remaining points are accumulated in the point accumulating section 27 shown in FIG. 1 which manages the number of accumulated points for each user. A known log-in technique using a user ID or the like may be used by the computer system 2 for the personal identification of the user.

The product category selection screen shown in FIG. 8 may be displayed in an overlapping manner on the detail setting screen shown in FIG. 7. In addition, the point list display screen shown in FIG. 9 may be displayed in an overlapping manner on the product category selection screen shown in FIG. 8.

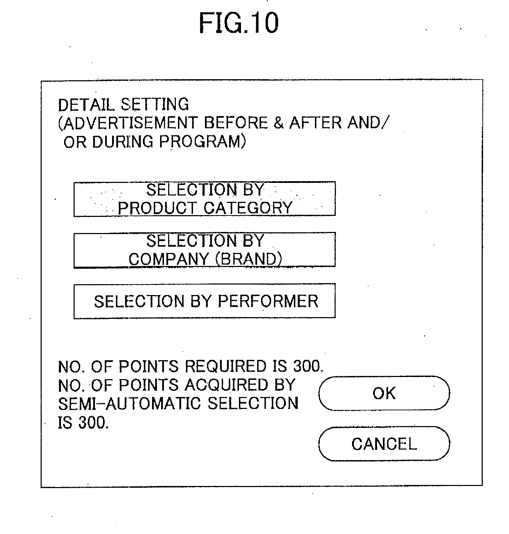

FIG. 10 is a diagram showing a detail setting screen for a case where the mode for semi-automatically selecting the advertisements is selected as the advertisement-selection method on the detail setting screen shown in FIG. 6. On the detail setting screen shown in FIG. 10, it is possible to select how the advertisements are to be searched and selected from the advertisements which are provided from the computer system 2, similarly to the detail setting screen shown in FIG. 7. More particularly, it is possible to make a selection by product category, a selection by company (brand) name, and a selection by performer. The selection by product category enables the user to select advertisements related to a product (or product category), by selecting the product (or product category) the user is interested in. The selection by company (brand) name enables the user to select advertisements related to a company or products of the company, by selecting the company the user is interested in. In addition, the selection by performer enables the user to select advertisements in which a performer such as an actor appears, by selecting the performer the user is interested in. When an "OK" button on the detail setting screen shown in FIG. 10 is selected, the selections made on the detail setting screen shown in FIG. 10 are confirmed and decided. When a "CANCEL" button on the detail setting screen shown in FIG. 10 is selected, the selections made on the detail setting screen shown in FIG. 10 are cancelled. The detail setting screen shown in FIG. 10 further displays the number of points required to receive the contents selected by the user, and the number of points which will be acquired by the selection of the mode for semi-automatically selecting the advertisements, in the form of messages. In the case shown in FIG. 10, the messages indicate that "the number of points required is 300", and "the number of points acquired by the semi-automatic selection is 300".

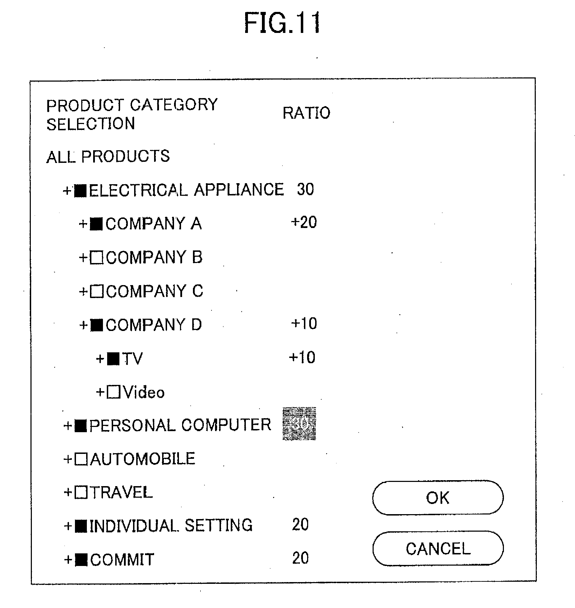

FIG. 11 is a diagram showing the product category selection screen which is displayed when the selection by product category is selected on the detail setting screen shown in FIG. 10. A tree of all product categories and products of each product category are displayed on the product category selection screen shown in FIG. 11. For example, electrical appliance, personal computer, automobile, food, travel, individual setting and commit (provider's choice) may be selected as the product category. With respect to the electrical appliance, companies A, B and C can be selected, and television (TV) and video deck (Video) can be selected for the electrical appliance of the company C. With respect to the individual setting, a product is selected at random by the computer system 2 depending on a ratio which will be described later, from the products for which the detail setting is made in the mode in which each advertisement is selected individually. With respect to the commit, a product is selected at random by the computer system 2 depending on a ratio which will be described later, but excluding the product for which a rejection has been set. In addition, with respect to the selected product categories and/or products, the user can set the ratio of the numbers of points which will be acquired by each selection. In the case shown in FIG. 11, a ratio 30 is set for the selection of the electrical appliance, a ratio 30 is set for the selection of the personal computer, a ratio 20 is set for the selection of the individual setting, and a ratio 20 is set for the selection of the commit. Hence, the computer system 2 selects the advertisements to be transmitted to the terminal equipment 3 depending on the ratios of the selected product categories. Of the ratio 30 set for the selection of the electrical appliance, a ratio 20 is allocated for the selection of the electrical appliance of the company A, and a ratio 10 is allocated for the selection of the electrical appliance (TV) of the company D. Of course, a total of the ratios of the points does not necessarily have to be 100 as in the case shown in FIG. 11.

The selections made on the product category selection screen shown in FIG. 11 are confirmed and decided when an "OK" button on the product category selection screen is selected. On the other hand, the selections made on the product category selection screen shown in FIG. 11 are cancelled when a "CANCEL" button on the product category selection screen is selected.

Of course, it is possible to display the product category selection screen shown in FIG. 11 in an overlapping manner on the detail setting screen shown in FIG. 10.

By setting the ratios of the product categories in the above described manner, the user can notify the user's general tastes to the computer system 2. In addition, the individual setting (selection of the advertisement and format thereof) made by the user (at the terminal equipment 3) and the general setting (selection of the advertisement and format thereof) made by the provider (at the computer system 2) can coexist. Furthermore, by selecting the commit, the user can receive information related to a category (or genre) the user has not specified.

The advertisement selection screen and the detail setting screen are not limited to those shown in FIGS. 5 and 6, and various screens may be used as long as the user is able to freely make a setting to suit the user's tastes. For example, the user may not like to see an advertisement displayed on a side or within the picture (intra-picture advertisement), such as a banner advertisement, in the form of a motion picture. In such a case, the screens should enable the user to turn OFF the motion picture advertisement or reduce the tone of the motion picture advertisement, for example. Accordingly, it is desirable to provide the following selection boxes "□" on the advertisement selection screen, and to enable the details to be set on the detail setting screen as indicated by the arrow.
□ Accept advertisements before and after and/or during a program
   → Detail Setting: Select/Reject sponsor company, Select/Reject individual advertisement
□ Accept banner advertisements
   → Detail Setting: Select/Reject sponsor company, Accept/Reject motion picture, Accept/Reject intra-picture advertisement, Degree of blending (α value of α-blending in the case of the intra-picture advertisement)
□ Accept intra-content advertisements
   → Detail Setting: Select/Reject sponsor company, Degree of emphasis (in the case of an advertisement of a soft drink by a company during a program, for example, the degree of emphasis of a scene in which a person drinks this soft drink)

When the format for receiving the banner advertisements is selected on the advertisement selection screen shown in FIG. 5, it is possible to increase or decrease the number of points depending on the settings made by the detail setting as shown in the following Table, in addition to setting the points similarly as described above in conjunction with FIGS. 7 through 11.

**Table**

| 1 BANNER AD./TIME | | NUMBER OF POINTS |
|---|---|---|
| Small Size Outside Still Picture | | 15 (Base) |
| Motion Picture Display | | +15 |
| Intra-Picture Display | | +15 |
| Size: | Large | +10 |
| | Medium | +5 |
| | Small | +0 |
| Tone: | Dark (51%<a) | +10 |
| | Normal (11%<a<50%) | +5 |
| | Light (α<10%) | +0 |
| Note: Only For Intra-Picture Display | | |

With respect to the banner advertisement, it is assumed that the base is 15 points per one hour of display, in the case of a still picture banner advertisement outside the picture having a small size and a light color. If the user accepts the motion picture display, the medium size and the light tone (that is, accepts an intra-picture display of a banner advertisement in the form of a motion picture that is blended with a light tone to the contents) and makes the corresponding changes, it becomes possible to acquire +35 additional points, and the total of acquired points becomes 50 points. By accepting the advertisement receiving format in a range (or within limits) the user does not particularly dislike, the user can receive the selected program while effectively accumulating points. On the other hand, the advertiser can provide striking advertisements in a range (or within limits) which does not make the user uncomfortable, and maintain the user's favorable impression of the advertiser.

Therefore, by selecting the advertisements having high points, the user can efficiently view the advertisements in a short time. In addition, since a long length of the advertisement does not necessarily correspond to a high point, various forms of advertisements can be generated.

When viewed from the provider, it is possible to display and notify the points of the advertisements to the user within the picture of the advertisement itself or on the selection screen, and to urge the user to make a selection. In addition, when the advertisements amounting to a predetermined number of points are distributed to the user, the provider distributes the program requested by the user and charges to the advertiser an advertising charges depending on the number of points. Hence, it is possible to realize advertisements having high advertising effects at a low cost.

Because the contents which can be received are determined depending on the points owned by the user, the user can freely select the desired advertisements with the desired combinations and with the desired receiving format. Moreover, the user can flexibly select the advertisements to be received and the receiving format of the advertisements depending on the user's needs, so as to shorten the time for which the advertisements are received or to receive for a long time the advertisements the user likes, for example.

When the same advertisement is received repeatedly, the advertising effect may fade. In such a case, it is possible to reduce the number of points acquired by 10% every time the same advertisement is received by the same user. Further, in the case of a serial advertisement which has 10 versions, for example, it is possible to add bonus points to the user who receives all of the 10 versions of the serial advertisement, from the first story to the tenth story, so as to urge the user to positively receive the advertisements from the user's side.

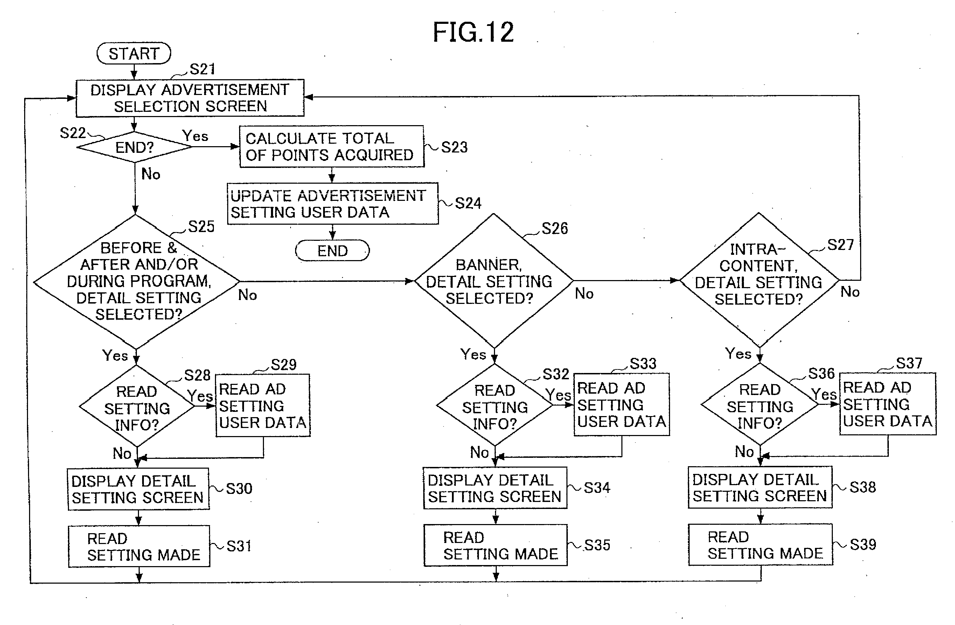

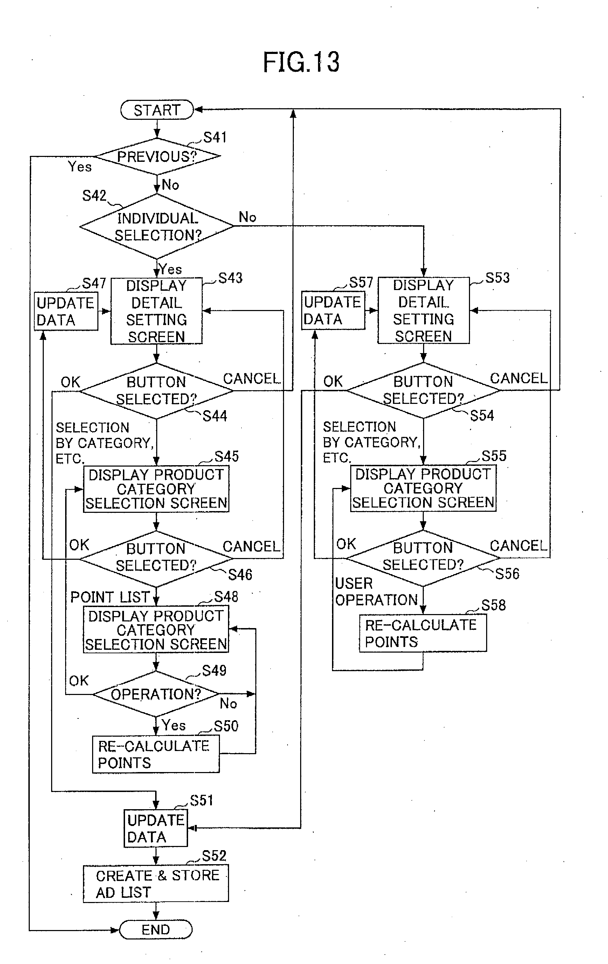

Next, a more detailed description will be given of the processes of the steps S4 and S5 shown in FIG. 2, by referring to FIGS. 12 and 13.

FIG. 12 is a flow chart for explaining a part of the process shown in FIG. 2 in more detail. More particularly, FIG. 12 shows the process for explaining the operation from the time when the format for receiving the advertisements before and after and/or during the program is selected on the advertisement selection screen shown in FIG. 5 to the time when the "detail setting" button is selected to display the detail setting screen shown in FIG. 6.

In FIG. 12, a step S21 displays the advertisement selection screen shown in FIG. 5, and a step S22 decides whether or not the "end" button is selected. If the decision result in the step S22 is YES, a step S23 calculates the total of points acquired by the user for each advertisement and format selected, and accumulates the total in the point accumulating section 27. A step S24 updates the advertisement setting user data within the advertisement setting user data section 26 depending on the total of points accumulated in the point accumulating section 27, and the process ends.

On the other hand, if the decision result in the step S22 is NO, a step S25 decides whether or not the format for receiving the advertisements before and after and/or during the program is selected and the "detail setting" button is selected on the advertisement selection screen shown in FIG. 5. If the decision result in the step S25 is NO, a step S26 decides whether or not the format for receiving the banner advertisements is selected and the "detail setting" button is selected on the advertisement selection screen shown in FIG. 5. If the decision result in the step S26 is NO, a step S27 decides whether or not the format for receiving the intra-content advertisements is selected and the "detail setting" button is selected on the advertisement selection screen shown in FIG. 5. The process returns to the step S21 if the decision result in the step S27 is NO.

If the decision result in the step S25 is YES, a step S28 decides whether or not, with respect to the setting of the advertisement setting user data, a mode for reading the setting information from the advertisement setting user data section 26 is selected on the advertisement selection screen shown in FIG. 5. If the decision result in the step S28 is YES, a step S29 reads the advertisement setting user data from the advertisement setting user data section 26, and uses read the advertisement setting user data as the default values for each of the settings. After the step S29 or, a mode for newly creating the advertisement setting user data is selected and the decision result in the step S28 is NO, a step S30 displays the detail setting screen for the format which receives the advertisements before and after and/or during the program depending on the advertisement setting user data. In addition, a step S31 reads the settings made on the detail setting screen shown in FIG. 6, and the process returns to the step S21. Details of the step S31 will be described later in conjunction with FIG. 13.

If the decision result in the step S26 is YES, a step S32 decides whether or not, with respect to the setting of the advertisement setting user data, the mode for reading the setting information from the advertisement setting user data section 26 is selected on the advertisement selection screen shown in FIG. 5. If the decision result in the step S32 is YES, a step S33 reads the advertisement setting user data from the advertisement setting user data section 26, and uses the read advertisement setting user data as the default values for each of the settings. After the step S33 or, if the mode for newly creating the advertisement setting user data is selected and the decision result in the step S32 is NO, a step S34 displays the detail setting screen shown in FIG. 6 for the format which receives the banner advertisements depending on the advertisement setting user data. In addition, a step S35 reads the settings made on the detail setting screen shown in FIG. 6, and the process returns to the step S21.

If the decision result in the step S27 is YES, a step S36 decides whether or not, with respect to the setting of the advertisement setting user data, the mode for reading the setting information from the advertisement setting user data section 26 is selected on the advertisement selection screen shown in FIG. 5. If the decision result in the step S36 is YES, a step S37 reads the advertisement setting user data from the advertisement setting user data section 26, and uses the read advertisement setting user data as the default values for each of the settings. After the step S37 or, if the mode for newly creating the advertisement setting user data is selected and the decision result in the step S36 is NO, a step S38 displays the detail setting screen shown in FIG. 6 for the format which receives the intra-content advertisements depending on the advertisement setting user data. Further, a step S39 reads the settings made on the detail setting screen shown in FIG. 6, and the process returns to the step S21.

FIG. 13 is a flow chart for explaining a part of the process shown in FIG. 2 in more detail. More particularly, FIG. 13 shows the process for explaining the operation from the time when the advertisement-selection method is selected on the advertisement selection screen shown in FIG. 5 to the time when the detail setting screens shown in FIGS. 7 and 8 are displayed.

The process shown in FIG. 13 is started when the process of the step S31 shown in FIG. 12 is carried out. In FIG. 13, a step S41 decides whether or not the "PREVIOUS" button is selected on the detail setting screen shown in FIG. 6. If the decision result in the step S41 is YES, the process returns from the step S31 to the step S21 shown in FIG. 12. If the decision result in the step S41 is NO, a step S42 decides whether or not the mode in which each advertisement is selected individually is selected as the advertisement-selection method. The process advances to a step S43 if the decision result in the step S42 is YES, and the process advances to a step S53 which will be described later if the decision result in the step S42 is NO.

The step S43 displays the detail setting screen shown in FIG. 7. A step S44 decides whether the "OK" button, the "CANCEL" button, the "selection by product category" button, the "selection by company (brand) name" button or the "selection by performer" button is selected on the detail setting screen shown in FIG. 7. If the step S44 decides that "CANCEL" button is selected, the process returns to the step S41. If the step S44 decides that the "OK" button is selected, the process advances to the step S51 which will be described later. In addition, if the step S44 decides that one of the "selection by product category", "selection by company (brand) name" and "selection by performer" buttons is selected, the process advances to a corresponding step depending on the selection. For the sake of convenience, it is assumed that the "selection by product category" button is selected, as in the case described above in conjunction with FIG. 7.

In this case, the process advances to the step S45, and the step S45 displays the product category selection screen shown in FIG. 8. A step S46 decides whether the "OK" button, the "CANCEL" or the "POINT LIST" button is selected on the product category selection screen shown in FIG. 8. If the step S46 decides that the "OK" button is selected, the process advances to a step S47 which updates the data within the advertisement setting user data section 26, and the process returns to the step S43. If the step S46 decides that the "CANCEL" button is selected, the process returns to the step S43. In addition, if the step S46 decides that the "POINT LIST" button is selected, the process advances to a step S48.

The step S48 displays the point list display screen shown in FIG. 9. A step S49 decides whether or not an operation is made by the user on the point list display screen shown in FIG. 9. More particularly, if the decision result in the step S49 is YES and the "OK" button is selected, the process returns to the step S45. On the other hand, the process returns to the step S48 if the decision result in the step S49 is NO. If the decision result in the step S49 is YES, a step S50 re-calculates the points for each page of the list shown in FIG. 9 and updates the display, and the process returns to the step S48.

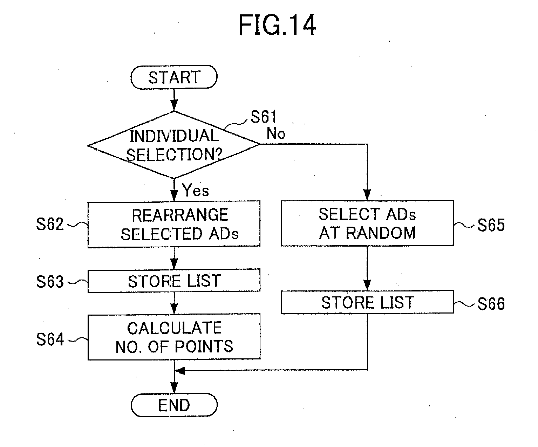

The step S51 updates the data within the advertisement setting user data section 26. A step S52 creates and stores an advertisement list which will be described later in conjunction with FIG. 14, and the process returns to the step S31 shown in FIG. 12.

The step S53 displays the detail setting screen shown in FIG. 10. A step S54 decides whether the "OK" button, the "CANCEL" button, the "selection by product category" button, the "selection by company (brand) name" button or the "selection by performer" button is selected on the detail setting screen shown in FIG. 10. If the step S54 decides that the "CANCEL" button is selected, the process returns to the step S41. The process advances to the step S51 described above if the step S54 decides that the "OK" button is selected. In addition, if the step S54 decides that the "selection by product category" button, the "selection by company (brand) name" button or the "selection by performer" button is selected, the process advances to a corresponding step depending on the selection. For the sake of convenience, it is assumed that the "selection by product category" button is selected, as in the case described above in conjunction with FIG. 10.

In this case, the process advances to a step S55 which displays the product category selection screen shown in FIG. 11. A step S56 decides whether the "OK" button is selected, the "CANCEL" button is selected or an operation is made by the user, on the product category selection screen shown in FIG. 11. If the step S56 decides that the "OK" button is selected, the process advances to a step S57 which updates the data within the advertisement setting user data section 26, and the process returns to the step S53. If the step S56 decides that the "CANCEL" button is selected, the process returns to the step S53. In addition, if the step S56 decides that an operation is made by the user, the process advances to a step S58. The step S58 re-calculates the point of each page of the list shown in FIG. 9 and updates the display, and the process returns to the step S55.

FIG. 14 is a flow chart for explaining creation and storage of the advertisement list. In FIG. 14, a step S61 decides whether or not the mode in which each advertisement is selected individually is selected as the advertisement-selection method on the detail setting screen shown in FIG. 6. If the decision result in the step S61 is YES, a step S62 rearranges at random the advertisements selected by the user. A step S63 stores a list of the rearranged advertisements into the advertisement inserting information section 29 shown in FIG. 1, as the advertisement list. A step S64 calculates the number of points presently owned by the user, and the process ends. On the other hand, if the mode in which the advertisements are semi-automatically selected is selected as the advertisement-selection method and the decision result in the step S61 is NO, a step S65 selects the advertisements at random by the provider, from the selected product category, so as to suit the ratio of the setting information. In addition, a step S66 stores a list of the advertisements selected by the provider into the advertisement inserting information section 29 shown in FIG. 1, as the advertisement list, and the process advances to the step S64 described above.

If the advertisements are to be initially selected completely at random, the mode where the advertisement and the format thereof are set by the provider is selected on the advertisement-selection selection menu of the content and advertisement selection screen shown in FIG. 4 or, the ratio for the commit may be set to 100% on the product category selection screen shown in FIG. 11. In this case, the advertisements selected by the provider are distributed to the user with the format selected by the provider. The user creates the information indicating the user's tastes, and this information is stored at the provider (computer system 2) or the user (terminal equipment 3). The creation and storage of the information indicating the user's tastes may be made on the detail setting screen shown in FIG. 10 or on another setting screen.

Even in a case where the advertisements are selected completely at random, it is desirable not to distribute the advertisements the user dislikes or to distribute the advertisements with the format the user dislikes. Hence, a log may be kept to store a history of which advertisements and the formats the user rejected by selecting a reject button on the screen. In this case, it is possible not to distribute the advertisements the user has rejected in the past, and not to distribute the advertisements with the format the user has rejected in the past, based on the log.

The provider selects the advertisements and the format thereof based on the information indicating the user's tastes, and distributes the selected advertisements in order or after shuffling, with the selected format. The provider distributes the program requested by the user after the distributed advertisements or the advertisements which will positively be distributed amounts to at least a predetermined number of points required to receive the requested program. The provider can charge the advertising charges to the advertiser depending on the number of times each advertisement is distributed.

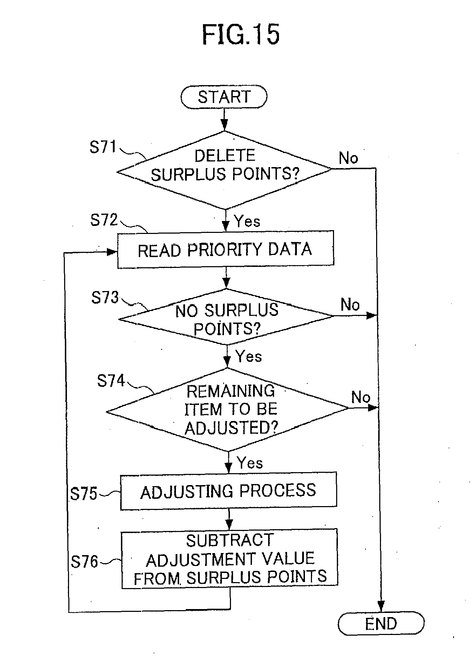

Next, a more detailed description will be given of the process of the step S6 shown in FIG. 2, by referring to FIGS. 15 through 19. FIG. 15 is a flow chart for explaining a part of the process shown in FIG. 2 in more detail, that is, the process of the step S6 shown in FIG. 2.

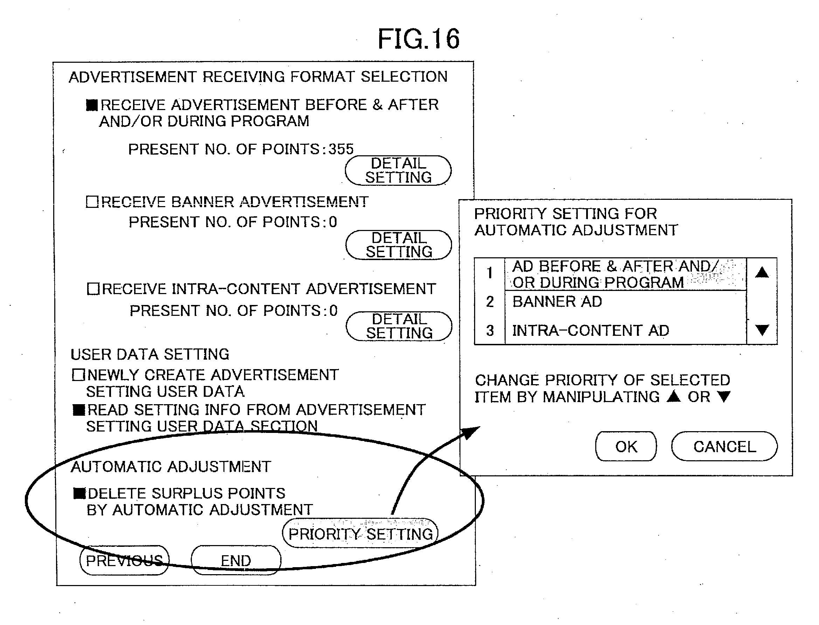

When the computer system 2 is provided with the function of setting the automatic adjustment of the points, an advertisement selection screen shown in FIG. 16 is displayed, in place of the advertisement selection screen shown in FIG. 5. FIG. 16 is a diagram showing the advertisement selection screen. In FIG. 16, those parts which are the same as those corresponding parts in FIG. 5 are designated by the same reference numerals, and a description thereof will be omitted. In the advertisement selection screen shown in FIG. 16, it is possible to select a mode in which surplus points are deleted by automatic adjustment, as an automatic point adjustment setting, in an automatic adjustment setting menu. When the mode in which the surplus points are deleted by the automatic adjustment is selected and a "priority setting" button in the automatic adjustment setting menu is selected, a priority setting menu for the automatic adjustment is displayed on the right side of the screen in FIG. 16. This priority setting menu for the automatic adjustment may be displayed in an overlapping manner on the advertisement selection screen as shown in FIG. 16 or, may be displayed as an independent screen. Items such as the advertisements before and after and/or during the program, the banner advertisements and the intra-content advertisements are selectable on the priority setting menu for the automatic adjustment, and the priority of the selected item can be changed by manipulating "▲" and "▼" buttons. When an "OK" button is selected, the selections made on the priority setting menu for the automatic adjustment are confirmed and decided. On the other hand, the selections made on the priority setting menu for the automatic adjustment are cancelled when a "CANCEL" button is selected.

In FIG. 15, a step S71 decides whether or not the mode in which the surplus points are deleted by the automatic adjustment is selected as the automatic point adjustment setting on the advertisement selection screen shown in FIG. 16. The process ends if the decision result in the step S71 is NO. If the decision result in the step S71 is YES, a step S72 reads priority data of the automatic adjustment set on the priority setting menu for the automatic adjustment. A step S73 decides whether or not no surplus points exist, and the process ends if no surplus points exist and the decision result in the step S73 is NO. On the other hand, if surplus points exist and the decision result in the step S73 is YES, a step S74 decides whether or not there is a remaining item which needs to be adjusted. The process ends if the decision result in the step S74 is NO. If the decision result in the step S74 is YES, a step S75 carries out an adjusting process starting from the item having the highest priority of the remaining items which need to be adjusted. A step S76 subtracts an adjustment value from the surplus points, and the process returns to the step S72.

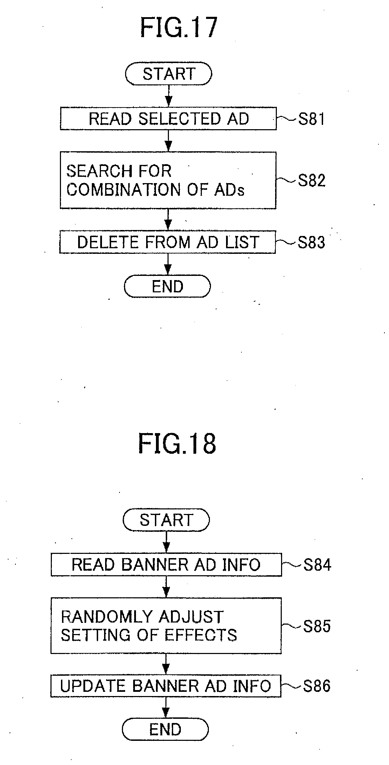

FIG. 17 is a flow chart for explaining the adjusting process for a case where the item having the highest priority is the advertisement before and after and/or during the program. In FIG. 17, a step S81 reads the selected advertisements from the advertisement list within the advertisement inserting information section 29 shown in FIG. 1. A step S82 searches for a combination of advertisements which are close to a value less than or equal to the surplus points, from the combinations of the selected advertisements. A step S83 deletes the searched combination of the advertisements from the advertisement list, and the process ends.

FIG. 18 is a flow chart for explaining the adjusting process for a case where the item having the highest priority is the banner advertisement. In FIG. 17, a step S84 reads the banner advertisement information from the banner advertisement information section 22 shown in FIG. 1. A step S85 randomly adjusts the setting of the effects of the selected banner advertisement in a direction so as to fade the effects. A step S86 updates the banner advertisement information within the banner advertisement information section 22, based on the banner advertisement having the effects thereof adjusted by the step S85, and the process ends.

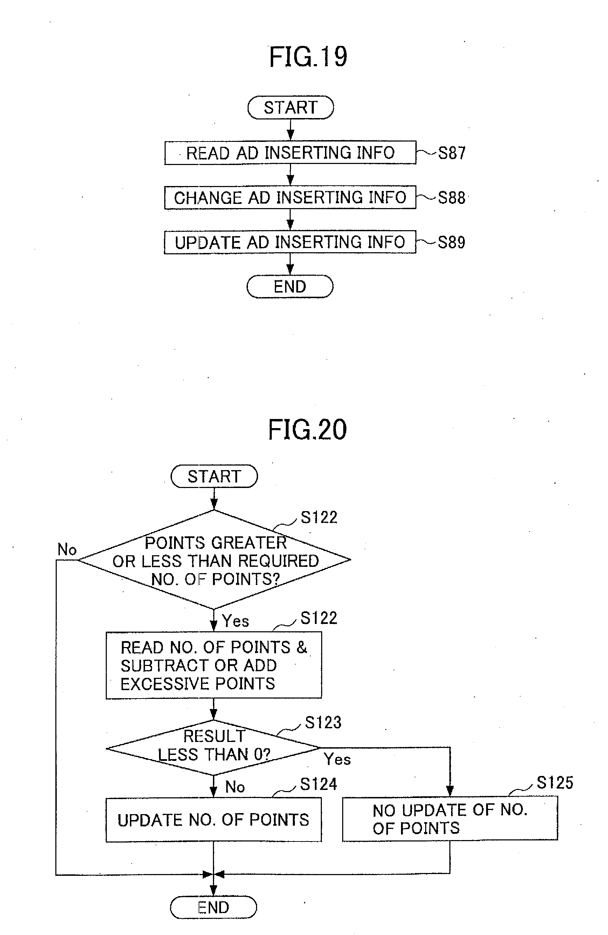

FIG. 19 is a flow chart for explaining the adjusting process for a case where the item having the highest priority is the intra-content advertisement. In FIG. 19 a step S87 reads the advertisement inserting information from the advertisement inserting information section 29 shown in FIG. 1. A step S88 changes the advertisement inserting information in a direction so as to eliminate the advertisement. A step S89 updates the advertisement inserting information within the advertisement inserting information section 29, based on the changed advertisement inserting information, and the process ends.

In a case where the total of selected points exceeds the number of points required to receive the requested contents, it is troublesome to finely adjust the number of points. On the other hand, from the point of the user, it seems as a loss when advertisements are received in excess. Accordingly, the advertisement and/or format thereof amounting to the number of unnecessary points (or excessive points) may be automatically deleted. The priority information which determines which advertisement and/or format is to be deleted, can be made adjustable by the setting made by the user. As a result, the surplus points can be made inconspicuous without requiring the user to manually delete the excessive points.

For example, assume a case where the total of points acquired is 355 points and there are 55 surplus points as shown in FIG. 9. In such a case, the fine adjustment of the excessive points is possible by removing the advertisements from some receiving items and/or changing the setting of the banner advertisements in the Table described above if any, that is, changing the setting in a direction such that the requested contents are more easier to see.

Next, a more detailed description will be given of the point pool and/or withdrawal process of the steps S7 and S8 shown in FIG. 2, by referring to FIG. 20. FIG. 20 is a flow chart for explaining a part of the process shown in FIG. 2 in more detail. More particularly, FIG. 20 shows the processes of the steps S7 and S8 shown in FIG. 2. In FIG. 20, a step S121 decides whether or not the number of points which will be acquired by the user is greater than or less than the number of points required to receive the requested contents. The process ends if the number of points owned by the user is equal to the number of points required to receive the requested contents and the decision result in the step S121 is NO. If the decision result in the step S121 is YES, a step S122 reads the number of points owned by the user from the point accumulating section 27, and subtracts the excessive points from the number of points which will be acquired and adds the subtracted excessive points to the number of points read from the point accumulating section 27 or, adds lacking points to the number of points which will be acquired and subtracts the added lacking points from the number of points read from the point accumulating section 27. A step S123 decides whether or not the number of points read from the point accumulating section and subjected to the addition of the excessive points or the subtraction of the lacking points is less than zero. The process advances to a step S124 if the decision result in the step S123 is NO, and the process advances to a step S125 if the decision result in the step S123 is YES. The step S124 judges that the number of points owned by the user is sufficient to receive the requested contents, and updates the number of points owned by the user and accumulated in the point accumulating section 27. In this case, the decision result in the step S8 shown in FIG. 2 becomes YES, and the process shown in FIG. 20 ends, thereby advancing the process to the step S9 shown in FIG. 2. On the other hand, the step S125 judges that the number of points owned by the user is insufficient to receive the requested contents, and displays a message informing the user that the number of points owned is insufficient to receive the requested contents, without updating the number of points owned by the user and accumulated in the point accumulating section 27. When the step S125 is carried out, the decision result in the step S8 shown in FIG. 2 becomes N0, and the process shown in FIG. 20 ends, thereby returning the process to the step S4 shown in FIG. 2.

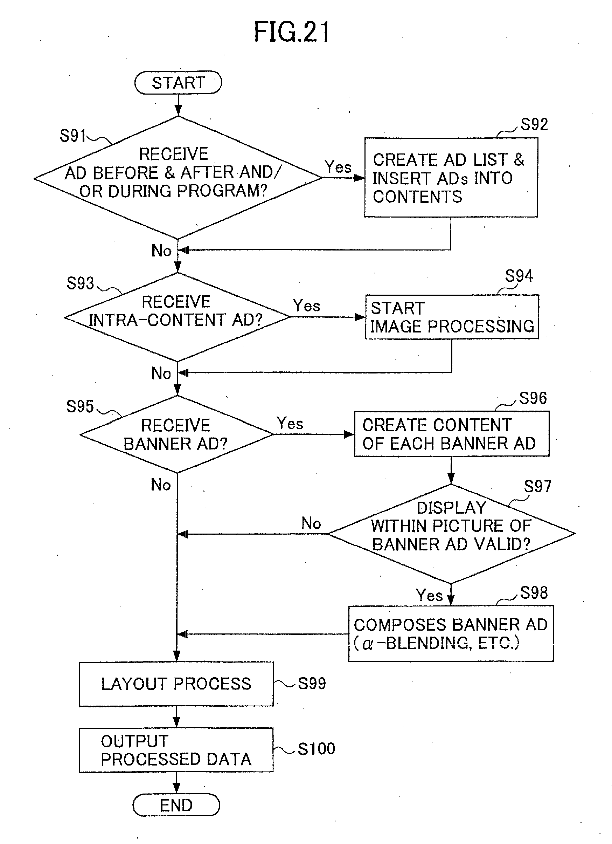

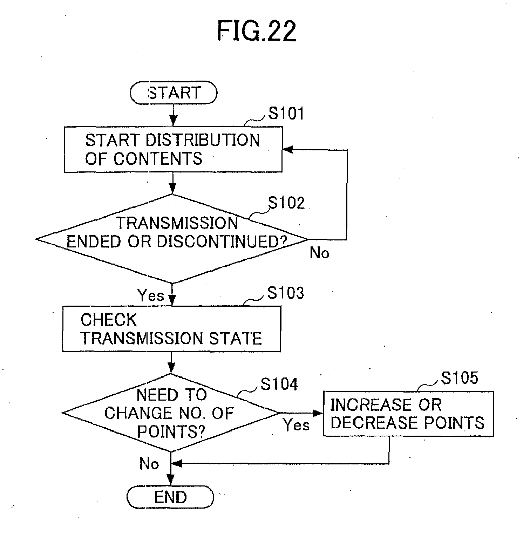

Next, a more detailed description will be given of the processes of the steps S9 and S10 shown in FIG. 2, by referring to FIGS. 21 and 22.

FIG. 21 is a flow chart for explaining a part of the process shown in FIG. 2 in more detail. FIG. 21 shows the process of the step S9. In FIG. 21, a step S91 decides whether or not the format for receiving the advertisements before and after and/or during the program is selected on the advertisement selection screen shown in FIG. 5, for example. If the decision result in the step S91 is YES, a step S92 creates an advertisement list within the advertisement inserting information section 29, and inserts the advertisements into the contents from the broadcasting content section 21 by the image data composing section 23, depending on the advertisement list. After the step S92 or if the decision result in the step S91 is NO, a step S93 decides whether or not the format for receiving the intra-content advertisements is selected on the advertisement selection screen shown in FIG. 5, for example. If the decision result in the step S93 is YES, a step S94 uses the advertisement inserting information within the advertisement inserting information section 29, and carries out an image processing with respect to the contents from the broadcasting content section 21 by the image data composing section 23. The advertisements are composed within the contents by this imaging process.

After the step S94 or if the decision result in the step S93 is NO, a step S95 decides whether or not the format for receiving the banner advertisements is selected on the advertisement selection screen shown in FIG. 5, for example. If the decision result in the step S95 is YES, a step S96 creates the content of each banner advertisement in the image data composing section 23, depending on the banner advertisement information within the banner advertisement information section 22. A step S97 decides whether or not the display within the picture of the banner advertisement is valid in the Table described above, for example, and the process advances to a step S98 if the decision result in the step S97 is YES. The step S98 composes the banner advertisement on the contents by the α-blending or the like, in the image composing section 23.

If the decision result in the step S95 or S97 is NO or, after the step S98, a step S99 carries out a layout process with respect to the image. This layout process includes the pre-processing of the Web server 28, such as the display of the banner advertisements. A step S100 outputs the processed data which includes the contents and the advertisements, to the streaming server 25, and the process ends.

FIG. 22 is a flow chart for explaining a part of the process shown in FIG. 2 in more detail. FIG. 22 shows the process of the step S10. In FIG. 22, a step S101 starts distribution of the contents including the advertisements from the streaming server 25. A step S102 decides whether or not the transmission of the contents is ended or is discontinued. The process returns to the step S101 if the decision result in the step S102 is NO. If the decision result in the step S102 is YES, a step S103 checks a transmission state of the contents and a transmission state of the advertisements. More particularly, the step S103 checks whether or not the advertisements and the contents are distributed to the end of each, by carrying out a process of confirming the reception state and/or the end at the user, in the computer system 2 or the terminal equipment 3. A step S104 decides whether or not the user needs to increase or decrease the number of acquired points. If the decision result in the step S104 is YES, a step S105 increases or decreases the number of points owned by the user and accumulated in the point accumulating section 27. The process ends if the decision result in the step S104 is NO or after the step S105.

The user may dislike an interruption during the program. In such a case, the user can select the advertisement collective reception on the detail setting screen shown in FIG. 6. As a result, the program is distributed to the user without interruptions. Since the provider can acquire, via the Web server 28, the information related to the settings made by the user on the detail setting screen shown in FIG. 6, the advertisements which should originally be inserted during the program distribution can all be distributed before the program. But if the advertisements are distributed in succession, the user may leave his seat or do other things besides watching while the advertisements are being received before the program. Hence, by taking into consideration the possibility of reduced advertising effect when the user collectively receives the advertisements, the acquired number of points for collectively receiving the advertisements may be set smaller than that for receiving the advertisements in individually or non-collectively.

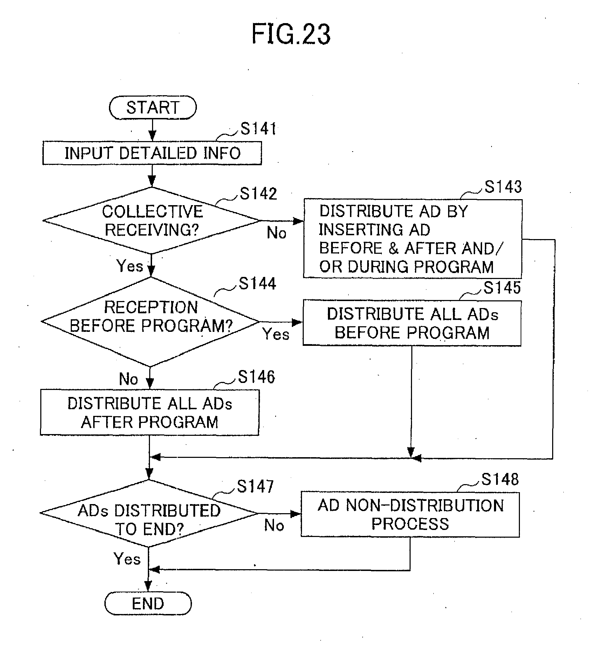

Next, a more detailed description will be given of the other processes of the step S10, by referring to FIG. 23.

FIG. 23 is a flow chart for explaining a process dependent on a setting on the detail setting menu shown in FIG. 6, that is, the process of the step S10. In FIG. 23, a step S141 inputs detailed information of the advertisements set by the user on the detail setting screen shown in FIG. 6. A step S142 decides whether or not the format for collectively receiving the advertisements is selected. If the decision result in the step S142 is NO, a step S143 distributes the advertisements by inserting the advertisements before and after and/or during the program, and the process advances to a step S147 which will be described later. On the other hand, if the decision result in the step S142 is YES, a step S144 decides whether or not the collective reception of the advertisements before the program is selected by the selected format for collectively receiving the advertisements.

If the decision result in the step S144 is YES, a step S145 distributes all of the advertisements before the program, and the process advances to the step S147 which will be described later. If the decision result in the step S144 is NO, a step S146 distributes all of the advertisements after the program, and the process advances to the step S147. The step S147 decides whether or not the advertisements are distributed to the end. If the decision result in the step S147 is NO, a step S148 carries out an advertisement non-distribution process. The advertisement non-distribution process subtracts the number of points amounting to the advertisements which were not distributed from the number of points acquired by or owned by the user. If the number of points owned by the user takes a negative value as a result of this advertisement non-distribution process, it is possible to hold the distribution of the requested contents until the user receives the advertisements amounting to a number of points sufficient to make the number of points owned by the user a positive value. Alternatively, it is possible to make the user receive the advertisements amounting to a number of points sufficient to make the number of points owned by the user a positive value or, make the user receive the advertisements which were not distributed when receiving the previously requested contents, prior to receiving the next requested contents. Similarly, when not all of the contents are distributed to the user, it is possible to carry out a process of adding to the number of points owned by the user a number of points amounting to the non-distributed portion of the contents. The process ends after the step S148 or if the decision result in the step S147 is YES.

In addition to the points which will be acquired by the user depending on the advertisements received, it is possible to give free points to the users in the form of presents on certain occasions. For example, it is possible to send a quiz to the user, and give out free points if the user makes a correct answer, so that the free points may be added to the points being pooled. In addition, it is possible to send a questionaire to the user, and give out free points if the user answers the questionaire. The questionaire may ask the user's impressions of the advertisements received by the user, for example. The quiz may be distributed to the user together with the advertisements, by distributing a quiz-type advertisement to the user, for example.

From the point of view of the user, it is advantageous to acquire free points by enjoying and answering the quiz, because the acquired points may be used to receive the contents the user wishes to see. From the point of view of the advertiser, it is possible to appeal the product to the user by giving the quiz on a portion of the product that is to be appealed, and it is also possible to give a motive for the user to know more about or know the details of the product. With regard to the questionaire, it is possible to provide a means for the advertiser to easily collect the user's impression on the product.

When sending the quiz using the quiz-type advertisement, the rules may be explained within the advertisement. For example, the rule may state that 5 points will be acquired for every correct answer out of 10 questions, and that 30 bonus points will be acquired in addition to 50 points if the answer is correct for all of the 10 questions. When the user answers the quiz, the result is totaled in the Web server 28 or the like, and a number of points depending on the number of correct answers is given out to the user.

When sending the questionaire using the quiz-type advertisement, 10 questions may be included in the questionaire, for example. When the user answers each question in the questionaire, the result is totaled in the Web server 28 or the like, and a number of points depending on the number of questions answered is given out to the user.

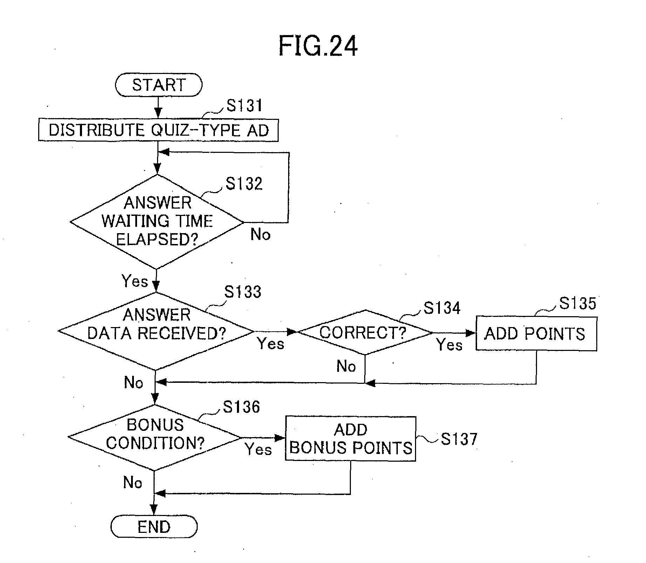

FIG. 24 is a flow chart for explaining a process of giving points as presents by distributing the quiz-type advertisement. In FIG. 24, a step S131 starts distributing the quiz-type advertisement. For example, the quiz-type advertisement may be distributed in response to a setting made by the user or in response to a setting made at the provider. A. step S132 decides whether or not an answer waiting time for which an answer is awaited from the user with respect to the quiz has elapsed. If the decision result in the step S132 is YES, a step S133 decides whether or not an answer data is received from the user. If the decision result in the step S133 is YES, a step S134 decides whether or not the answer is correct. If the decision result in the step S134 is YES, a step S135 carries out a process of adding a number of points to be given to the correct answer, as a present, to the number of points owned by the user and accumulated in the point accumulating section 27.

If the decision result in the step S133 or S134 is NO or, after the step S135, a step S136 decides whether or not a bonus condition for giving out bonus points, such as all of the answers being correct, is satisfied. If the decision result in the step S136 is YES, a step S137 carries out a process of adding a number of bonus points to be given when the bonus conditions is satisfied, as a present, to the number of points owned by the user and accumulated in the point accumulating section 27. The process ends if the decision result in the step S136 is NO or after the step 8137.

The points can be finely controlled by increasing of decreasing the number of points owned by the user, depending on the advertisements and/or contents which are not distributed, and specific conditions other than the advertisements and the formats thereof, such as presents.

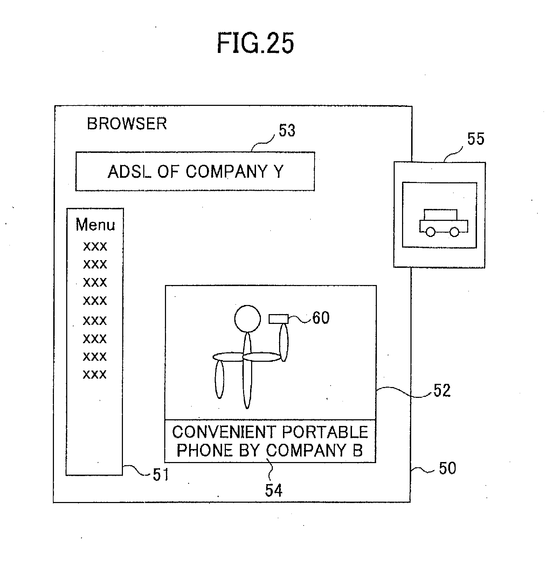

FIG. 25 is a diagram for explaining a format of a received advertisement which is received by the terminal equipment 3 and is displayed on the display unit of the terminal equipment 3. A menu 51, a display screen 52, a banner advertisement 53 other than the screen 52, a banner advertisement 54 within the display screen 52, and a sub-window 55 are displayed in a browser screen 50 shown in FIG. 25. In addition, as one example of the intra-content advertisement, a product 60 which is an advertising target is included in the contents displayed within the display screen 52.

When distributing the advertisements before and after and/or during the contents (program), the advertisement and the contents are alternately displayed within the display screen 52. At least one of the banner advertisements 53 and 54 may be displayed in this state. In addition, an advertisement may also be displayed within the sub-window 55. In this case, it is desirable not to reproduce the audio corresponding to the contents displayed within the sub-window 55, and to reproduce only the audio corresponding to the contents displayed on the display screen 52.

Advertisements equivalent to the advertisements distributed before and after and/or during the program may be displayed within the sub-window 55, but it becomes difficult to distinguish the display screen 52 and the sub-window 55 if the displayed sub-window 55 is large. In such a case, the number of points may be acquired by the user depending on whether the reproduced audio corresponds to the display screen 52 or the sub-window 55. For example, the number of points which will be acquired when receiving the advertisements before and after the program may be acquired when reproducing the audio of the advertisement, and the number of points which may be acquired when reproducing the audio of the program may be reduced compared to the case where the audio of the advertisement is reproduced. In other words, a number of points obtained from a formula (number of points acquired)=(points acquired by receiving the advertisment) × (fixed 30%) × (size ratio of the contents and the screen) may be given to the user when the user is reproducing the audio of the program.

Next, a description will be given of a second embodiment of the information distribution method according to the present invention, a second embodiment of the information distribution apparatus according to the present invention, a second embodiment of the computer-readable storage medium according to the present invention, and a second embodiment of the business method according to the present invention. The structure of the system which employs the second embodiment of the information distribution method may be the same as that shown in FIG. 1, and the basic operation of the system may be the same as that shown in FIG. 2, and thus, an illustration and description of the system structure and the basic operation thereof will be omitted.

In the second embodiment, when the format for receiving the intra-content advertisement is selected on the advertisement selection screen shown in FIG. 5, a portion of the contents and/or a portion of the advertisement may be replaced by arbitrary image information before being distributed. For example, in a case where the intra-content advertisement is related to a soft drink a main character within the contents drinks, it is possible to replace the image information on a can of the soft drink to that of a company B from that of a company A. Accordingly, even in a case where the sponsor of the program is initially the company A but the sponsor is later changed to the company B, it is possible to cope with this change in sponsor by simply replacing the image information on the can of the soft drink before distributing the intra-content advertisement, without the need to change the intra-content advertisement itself. Further, if an automobile manufactured by a company C appears within the program contents and the sponsor of the program is a company D, the same program contents can be distributed to suit the sponsor of the program by simply replacing the image information of the automobile to that of the company D from that of the company C. Similarly, an advertisement appearing within the contents, such as a signboard, can be replaced by another advertisement if necessary.

In the following description, it is assumed for the sake of convenience that, when replacing arbitrary image information forming a portion of the contents and/or the advertisements before the distribution thereof, a number of target objects (that is, a number of replacing portions) which are replaced is one. In this embodiment, the advertisement inserting information section 29 within the computer system 2 shown in FIG. 1 stores information necessary to replace the image information of the replacing portion to another image information. This information stored in the advertisement inserting information section 29 is related to position, size, angle, luminance, color or tint, masking shape and the like of the replacing portion. The information related to the masking shape is to enable replacement of only the image information of the can of the soft drink so as not to replace the image information of portions such as the hand and fingers holding the can of the soft drink, when the character holds the can of the soft drink in his hand and the can of the soft drink is the replacing portion. When a replace instruction is input to the image data composing section 23 from the input section of the computer system 2, the image data composing section 23 replaces the image information of the replacing portion within the contents from the broadcasting content section 21 by another image information based on the information from the advertisement inserting information section 29, according to the replace instruction, and supplies the composed image data to the streaming server 25. The replacement of the image information in the image data composing section 23 is carried out in real-time by a digital signal processing. In this embodiment, the digital signal processing for replacing the image information is carried out in the step S94 shown in FIG. 21.

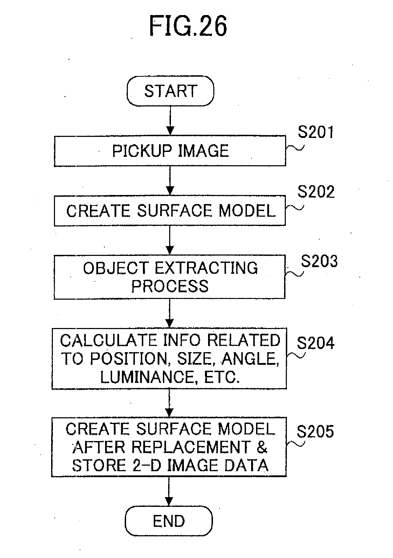

FIG. 26 is a flow chart for explaining a pre-processing which creates information necessary to replace the image information the replacing portion by another image information. In FIG. 26, a step S201 picks up the image of the program (contents) by a known method using a camera, for example. Of course, the image may be picked up in advance, and the step S201 may obtain the image by reading the stored image from a storage medium or by receiving the stored image transmitted from another computer system. A step S202 obtains a two-dimensional (2D) image data of a replacing portion by picking up the two-dimensional image of the replacing portion, and creates a surface model. The surface model is created by calculating a three-dimensional (3D) image data corresponding to the two-dimensional image data. Of course, the two-dimensional image may be picked up in advance, and the step S202 may obtain the two-dimensional image data image by reading the stored two-dimensional image data from a storage medium or by receiving the stored two-dimensional image data transmitted from another computer system. Various known techniques used in CAD systems may be employed to calculate the three-dimensional image data from the two-dimensional image data, including a method proposed in a Japanese Laid-Open Patent Application No.9-97354, for example. The step S201 may be carried out after carrying out the step S202.

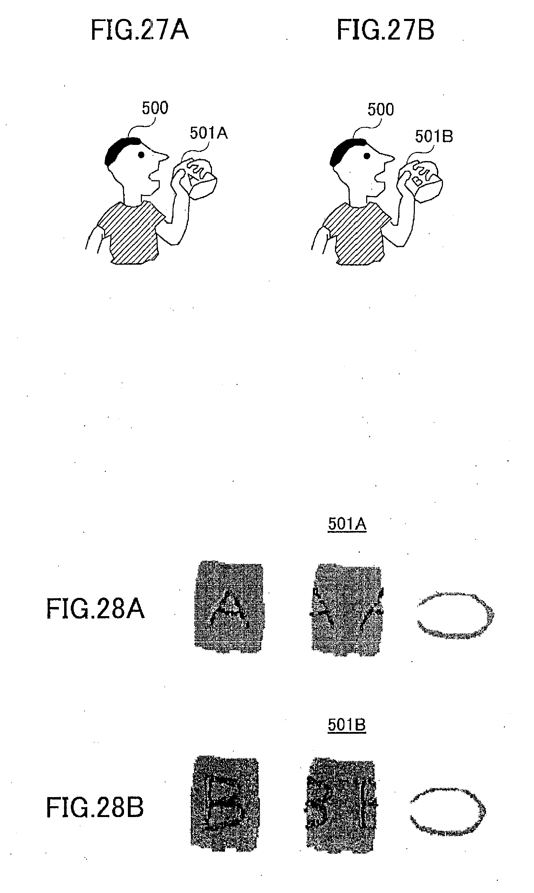

FIGS. 27A and 27B are diagrams for explaining a process of replacing the image information of the replacing portion within the contents by another image information. FIG. 27A shows the two-dimensional image picked up by the step S201. This two-dimensional image includes a character 500, and a can 501A of a soft drink which is produced by a company A and is held in the hand of the character 500. For the sake of convenience, it is assumed that the can 501A forms the replacing portion, and that the can 501A is to be replaced to a can 501B of the soft drink produced by a company B as shown in FIG. 27B.

FIGS. 28A and 28B are diagrams for explaining the surface model with respect to the two-dimensional image shown in FIGS. 27A and 27B. FIG. 28A shows the surface model of the can 501A, and FIG. 28B shows the surface model of the can 501B. In this embodiment, the two-dimensional image is a motion picture, but the two-dimensional image may of course be a still picture.

Returning now to the description of FIG. 26, a step S203 carries out an object extracting process to extract an object, that is, the replacing portion, from the two-dimensional image data (motion picture data) related to the two-dimensional image shown in FIG. 27A. In this embodiment, the object to be extracted is the can 501A shown in FIG. 27A. The object extracting process itself is known, and various techniques may be employed, such as the methods proposed in Japanese Laid-Open Patent Applications No.2001-197288 and No.2001-266158, for example.

A step S204 calculates information related to position, size, angle (direction), luminance, color or tint, and the like of the object (can 501A) for each frame of the motion picture, based on the surface model of the object shown in FIG. 28A. In a case where the three-dimensional object is known, it is possible to calculate in advance apparent two-dimensional images of the three-dimensional object observed from various directions, and to calculate the position, direction and the like of the three-dimensional model by comparing the two-dimensional images of the three-dimensional model which is picked up and the apparent two-dimensional images. Such a method of calculating the position, direction and the like of the three-dimensional model is proposed in Murase et al., "3D Object Recognition from Appearance -Parametric Eigenspace Method-", Electronic Information Communication Society Article Magazine D2, Vol.J77, No.11, pp.2179-2187, 1994.

A step S205 creates the surface model of the object (can 501B) after the replacement for each frame, based on the surface model of the object shown in FIG. 28B and the information calculated in the step S204. In addition, the step S205 stores the two-dimensional image data of the created surface model into the advertisement inserting information section 29 shown in FIG. 1, and the process ends.

In a case where the contents employ the MPEG4, it is supposed that the object and the background are transmitted separately and combined at the receiving end. Hence, the contents may be provided in a state where the pre-processing shown in FIG. 26 has already been carried out. In such a case, the object extracting process of the step S203 shown in FIG. 26 is unnecessary, and by creating a plurality of kinds of objects in advance, it is possible to select one of the objects based on the setting information set by the user when distributing the contents.

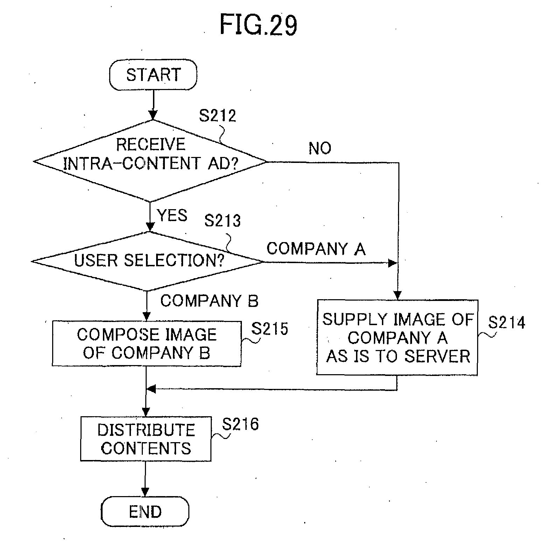

FIG. 29 is a flow chart for explaining a part of the process shown in FIG. 2 in more detail. More particularly, FIG. 29 shows the process of the step S10 shown in FIG. 2 in more detail. In FIG. 29, a step S212 decides whether or not the format for receiving the intra-content advertisements is selected on the advertisement selection screen shown in FIG. 5, for example. If the decision result in the step S212 is NO, a step S214 supplies the image shown in FIG. 27A, that is, the contents including the can 501A of the soft drink produced by the company A, as it is from the image composing section 23 to the streaming server 25. Then, a step S216 distributes the contents from the streaming server 25, and the process ends. The data of the contents supplied to and distributed from the streaming server 25 may be temporarily stored within the streaming server 25 or in a temporary memory space, before being distributed.

On the other hand, if the decision result in the step S212 is YES, a step S213 decides whether the company name of the company A or the company B is selected by the user on the point list display screen shown in FIG. 9, for example. If the company name of the company A is selected in the step S213, the process advances to the step S214 described above. On the other hand, the process advances to a step S215 if the company name of the company B is selected in the step S213. The step S215 supplies to the streaming server 25 the contents in which the can 501A of the soft drink produced by the company A in the image shown in FIG. 27A is replaced by the can 501B of the soft drink produced by the company B as shown in FIG. 27B in the image data composing section 23. Then, the step S216 distributes the contents from the streaming server 25, and the process ends. The data of the contents supplied to and distributed from the streaming server 25 may be temporarily stored within the streaming server 25 or in a temporary memory space, before being distributed.

FIG. 30 is a diagram showing a structure of a system employing a modification of the second embodiment of the information distribution method according to the present invention. In FIG. 30, those parts which are the same as those corresponding parts in FIG. 1 are designated by the same reference numerals, and a description thereof will be omitted.

In a case where the replacing portion within the contents is relatively small, the replacement of the image data of the replacing portion can be carried out in real-time by the digital signal processing as in the second embodiment described above. However, in a case where the replacing portion within the contents is relatively large or, the contents slightly change depending on the replacement and the story or script needs to be slightly changed, the real-time digital signal processing may not keep up with the amount of processing and cause a delay. Hence, in such a case, this modification creates a plurality of kinds of intermediate data in advance, and the original data of the contents is replaced by a desired intermediate data based on the setting information set by the user, at least until the data of the replacing portion is obtained by the digital signal processing.

For example, it is assumed for the sake of convenience that an automobile manufactured by a company M appears in the original contents, and the automobile is to be replaced by an automobile manufactured by a company T or H. An original content section 71, replacing content sections 72 and 73, and a switch section 74 shown in FIG. 30 correspond to the broadcasting content section 21 shown in FIG. 1. The original content section 71 stores the data of the original contents in which the automobile of the company M appears. The replacing content section 72 stores the data of the portion in which the automobile of the company M appears in the original contents is replaced by the automobile of the company T. The replacing content section 73 stores the data of the portion in which the automobile of the company M appears in the original contents is replaced by the automobile of the company H. When the company name of the company T is selected, for example, the switch section 74 switches the portion of the original contents, in which the automobile of the company M appears, and are output from the original content section 71, to the portion in which the automobile of the company T appears and is output from the replacing content section 72, based on the setting information set by the user on the point list display screen shown in FIG. 9, and supplies the data to the image data composing section 23.

The replacing content section 72 may store the entire contents corresponding to the original contents and in which the portion where the automobile of the company M appears in the original contents is replaced by the portion where the automobile of the company T appears. Similarly, the replacing content section 73 may store the entire contents corresponding to the original contents and in which the portion where the automobile of the company M appears in the original contents is replaced by the portion where the automobile of the company H appears. In this case, when the company name of the company H is selected, for example, the switch section 74 switches the data of contents supplied to the image data composing section 23 from the data of the original contents output from the original content section 71 to the data of the contents output from the replacing content section 73, based on the setting information set by the user.

The replacing target which is to be replaced when distributing the contents by replacing a portion of the contents by the arbitrary image information forming a portion of the advertisement, is not limited to one and a plurality of replacing targets may be replaced. In addition, when distributing the contents by replacing a portion thereof by the arbitrary image information, it is possible to also display a banner advertisement inside and/or outside the contents. In this case, it is possible to further improve the advertising effect by emphasizing the intra-content advertisement by the banner advertisement.

According to the second embodiment and the modification thereof, it is possible to realize intra-content advertisements for a plurality of kinds of products and a plurality of companies, and greatly reduce the production cost of the advertisements, by creating the original contents of one intra-content advertisement and replacing a portion of the original contents by an arbitrary image information depending on the kind of product and/or company. Moreover, it is possible to use the original contents of one intra-content advertisement in which a plurality of kinds of products (for example, a camera and a television set) appear, and make the appropriate replacements to simultaneously realize the advertisements for a plurality of companies and/or a plurality of kinds of products.

Further, the present invention is not limited to these embodiments, but various variations and modifications may be made without departing from the scope of the present invention.

## Claims

1. An information distribution system comprising an information distribution apparatus for distributing contents and advertisements to a user terminal equipment via a network, **characterized in that**:
the information distribution apparatus comprises:
a replacing section which replaces a portion of the contents by arbitrary image information forming a portion of an advertisement, based on a format with which the advertisements are to be received and is requested from the user terminal equipment; and
a distributing section which distributes the contents in which said portion is replaced by the arbitrary image information to the user terminal equipment,
and **in that** each user terminal equipment comprises:
a selecting section which selects a format of advertisements; and
a transmitting section which transmits the format selected by the selecting section to the information distribution apparatus.

2. The information distribution system as claimed in claim 1, **characterized in that** the user terminal equipment further comprises:
a display section which displays selection information for selecting a format of advertisements.

3. The information distribution system as claimed in claim 1 or 2, **characterized in that** said format is determined depending on at least one parameter selected from a group consisting of parameters related to time restrictions, parameters related to image restrictions, parameters related to attribute restrictions, and parameters related to audio restrictions.

4. The information distribution system as claimed in any of claims 1 to 3, **characterized in that** said information distribution apparatus further comprises:
a managing section which manages a number of points depending on the advertisements and the format; and
a control section which controls distribution of the contents depending on the number of points.
